# EUROPÄISCHE PATENTSCHRIFT

(11) **EP 2 375 100 B1**
(45) Veröffentlichungstag und Bekanntmachung des Hinweises auf die Patenterteilung: **17.12.2014**
(21) Anmeldenummer: 11002919.6
(22) Anmeldetag: 07.04.2011
(51) Int. Cl.: F16F 15/34

(54) **Auswuchtgewicht mit Haltefeder**
Balancing weight with retaining spring
Poids d'équilibrage doté d'un ressort de retenue

(30) Priorität: 12.04.2010 DE 202010004906 U
(43) Veröffentlichungstag der Anmeldung: 12.10.2011
(73) Patentinhaber: Seeh, Günter Manfred, 78579 Neuhausen (DE); Heller, Karl-Heinz, 72406 Bisingen (DE)
(72) Erfinder: Seeh, Günter Manfred, 78579 Neuhausen (DE); Heller, Karl-Heinz, 72406 Bisingen (DE)
(74) Vertreter: Patentanwälte Westphal, Mussgnug & Partner

(56) Entgegenhaltungen:
- DE-B4- 10 102 321
- US-A- 2 576 724
- US-A- 3 495 877
- US-A- 4 728 154

## Beschreibung

Die vorliegende Erfindung betrifft ein Auswuchtgewicht mit Haltefeder mit den Merkmalen des Oberbegriffs des Anspruchs 1.

Auswuchtgewichte werden bekanntermaßen zur Kompensation der Unwucht von Fahrzeugrädern eingesetzt. Unwuchtprobleme entstehen durch minimale Fertigungstoleranzen, Beschädigungen oder unterschiedliche Abnutzung der Räder bzw. der Felgen der Kraftfahrzeuge. Gelöst werden diese Unwuchtprobleme durch Befestigung eines Ausgleichgewichts vorzugsweise an der Felge des Kraftfahrzeugs.

In der DE 101 02 321 B4 wird ein Auswuchtgewicht mit einem im Druckgussverfahren hergestellten Gewichtskörper mit eingegossener Haltefeder beschrieben. Dabei ermöglicht die Haltefeder eine Festlegung des Auswuchtgewichts mittels der Schlageinwirkung eines Hammers an der Felge eines Rades. Die Form des Auswuchtgewichts ist der Geometrie der Felgeninnenseite bzw. des Felgenhorns angepasst, sodass das Auswuchtgewicht nach der Montage direkt an der Felgeninnenseite bzw. am Felgenhorn anliegt. Diese angepassten Geometrien zwischen Felge und Auswuchtgewicht, die man bei sämtlichen unterschiedlichen konventionellen Auswuchtgewichten beobachten kann, haben ihre Ursache darin, dass angestrebt wird, das Gewicht möglichst fest und nah an der Felge zu halten, um den während der Fahrt auftretenden Radialkräften möglichst wenig Angriffsfläche zu bieten.

Ein Nachteil der in der DE 101 02 321 B4 beschriebenen Auswuchtgewichte besteht darin, dass die Montage der Gewichte mit relativ großem Kraftaufwand erfolgt, wobei die Auswuchtgewichte mittels eines Hammers auf die Felge geschlagen werden. Dabei besteht die Gefahr der Beschädigung der Felge. Durch die der Felge angepassten Geometrie des Auswuchtgewichts ist zwischen den Federschenkeln der Haltefeder relativ wenig Platz vorhanden für die Einführung des Felgenhorns, sodass ein starkes Aufspreizen der Feder bei der Montage erforderlich ist, was die Gefahr des Überspannens der Feder bei der Montage mit sich bringt. Hinzu kommt, dass aufgrund der angestrebten passgenauen Geometrie zwischen Auswuchtgewicht und Felge die allgemeine Verwendbarkeit der Auswuchtgewichte für unterschiedliche Felgen eingeschränkt ist.

In der US 2,576,724 A wird ein Auswuchtgewicht beschrieben, in dessen Gewichtskörper in der Mitte auf der zur Felge weisenden Seite eine Nut angeordnet ist, welche die Funktion hat, eine Dreipunktauflage des montierten Gewichts an der Felge zu bewirken. In der Praxis konnten sich derartige Auswuchtgewichte nicht durchsetzen.

Es besteht somit Bedarf an Auswuchtgewichten, die die Nachteile des Standes der Technik nicht aufweisen.

Gelöst wird diese Aufgabe durch ein Auswuchtgewicht mit den Merkmalen des Anspruchs 1. Vorteilhafte Ausgestaltungen und Weiterentwicklungen des erfindungsgemäßen Auswuchtgewichts sind Gegenstand der Unteransprüche.

Gegenstand der Erfindung ist ein Auswuchtgewicht mit einem Gewichtskörper, der mit einer U-förmigen, zwei Federschenkel aufweisenden Haltefeder verbunden ist. Dabei ist die Haltefeder mit dem ersten ihrer beiden Federschenkel am Gewichtskörper direkt befestigt, während der zweite, freie Federschenkel zur Befestigung des Auswuchtgewichts am Felgenhorn vorgesehen ist. Die Befestigung der Haltefeder kann dabei konventionell durch Nieten oder Schweißen erfolgen. Bei einer bevorzugten Ausgestaltung der vorliegenden Erfindung besitzt das Auswuchtgewicht einen im Druckgussverfahren hergestellten Gewichtskörper, in den die U-förmige Haltefeder eingegossen ist. Ebenso kann die Haltefeder aber auch im Gewichtskörper eingeklemmt oder auf sonstige Weise am Gewichtskörper befestigt sein.

Der bei der Montage des Auswuchtgewichts dem Felgenhorn zugewandte Teilbereich des Gewichtkörpers weist ein zum ersten Federschenkel hin zurückversetztes Profil auf. Dadurch wird zwischen den beiden Federschenkeln Platz geschaffen für die Einführung des Felgenhorns, sodass ein derart profiliertes Auswuchtgewicht problemlos und ohne großen Kraftaufwand auf ein entsprechendes Felgenhorn aufgebracht werden kann.

Mit Ausnahme dieses zurückversetzten Profils weist das Auswuchtgewicht eine dem üblichen Kraftfahrzeugrad, insbesondere dessen Felgeninnenseite oder Felgenhorn, weitgehend angepasste geometrische Form auf. Auf diese Weise wird nach der Montage ein ausreichend fester Sitz des Auswuchtgewichts am Kraftfahrzeugrad garantiert, wobei jedoch nicht wie bei den konventionellen Auswuchtgewichten der gesamte Gewichtskörper an der Felge anliegt, sondern im Montagezustand zwischen dem Gewichtskörper und der Felge in dem Teilbereich, der das zurückversetzte Profil aufweist, ein Hohlraum ausgebildet ist. Untersuchungen haben gezeigt, dass dieser Hohlraum für den festen Sitz des Auswuchtgewichts keine Nachteile mit sich bringt.

Als Materialien für den Gewichtskörper kommen alle konventionellen Materialien in Frage, die üblicherweise für Auswuchtgewichte eingesetzt, wie zum Beispiel die Metalle Zink, Blei und Eisen sowie Legierungen davon, aber auch Kunststoffe. Entsprechend einem allgemeinen Trend bei den Auswuchtgewichten sieht eine bevorzugte Ausgestaltung der vorliegenden Erfindung vor, dass das Auswuchtgewicht im Wesentlichen aus Zink besteht. Eine weitere vorteilhafte Ausgestaltung sieht vor, dass das Zink mit geringen Anteilen an Aluminium und/oder Kupfer legiert ist.

Üblicherweise ist die Haltefeder selber aus Stahl gefertigt, der vorzugsweise verzinkt ist.

Die besondere Geometrie des Auswuchtgewichts bringt den zusätzlichen Vorteil mit sich, dass ein derart gestaltetes Auswuchtgewicht selbst für stark unterschiedlich geformte Felgen eingesetzt werden kann, da im Einführungsbereich für das Felgenhorn zwischen den Federschenkeln der U-förmigen Haltefeder das zurückversetzte Profil des Gewichtskörpers ausreichend Platz für das Felgenhorn lässt, so dass auch ungünstig geformte Felgenhörner problemlos mit dem erfindungsgemäßen Auswuchtgeweicht bestückt werden können. In diesem Zusammenhang wurde auch festgestellt, dass es für einen festen Halt ausreicht, wenn das Auswuchtgewicht lediglich punktuell an der Felge anliegt.

Im Folgenden wird das erfindungsgemäße Auswuchtgewicht anhand von Zeichnungen ausführlich erläutert. Dabei zeigen
- Fig. 1-3: perspektivische Darstellungen aus unterschiedlichen Blickwinkeln jeweils eines Felgenausschnittes mit einem Auswuchtgewicht
- Fig. 4: eine Schnittdarstellung eines Auswuchtgewichts zusammen mit einem Ausschnitt einer Felge,
- Fig. 5: die Schnittdarstellung aus Fig. 1 zu Beginn der Montage,
- Fig. 6: die Schnittdarstellung aus Fig. 1 während der Montage des Auswuchtgewichts,
- Fig. 7: eine Schnittdarstellung des Auswuchtgewichts mit einem Ausschnitt aus der Felge nach fertiger Montage,
- Fig. 8: eine Draufsicht auf den Sichtseite des Auswuchtgewichts
- Fig. 9: eine vergrößerte Schnittdarstellung des Auswuchtgewichts entlang der Achse A aus Figur 8 und
- Fig. 10: eine den Schnitten aus den Figuren 4-7 angepasste Schnittdarstellung entlang der Achse A aus Figur 8.

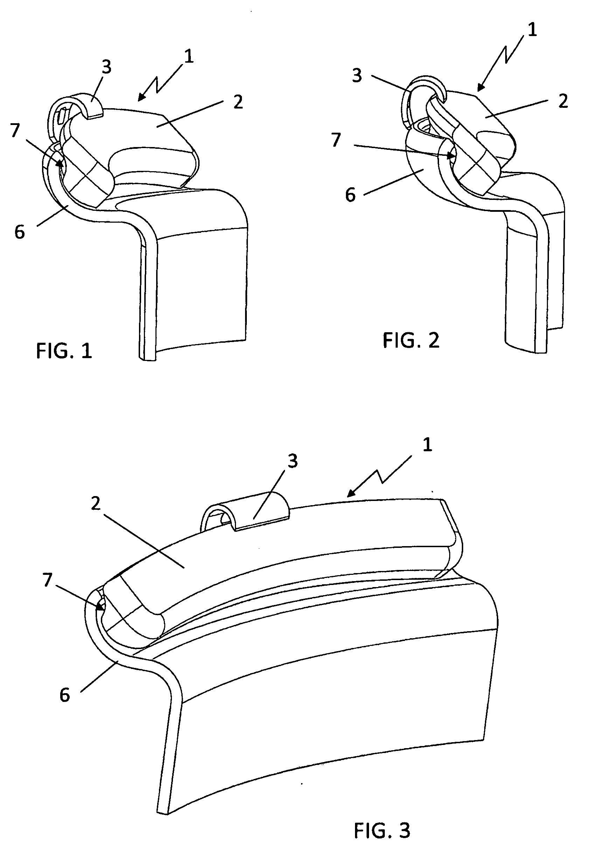

In den Figuren 1 bis 3 ist das Zusammenspiel des erfindungsgemäßen Auswuchtgewichts 1 mit dem Felgenhorn 6 perspektivisch bei unterschiedlichen Blickwinkeln dargestellt. Bei diesen Darstellungen wird deutlich, dass sich der Gewichtskörper 2 mitsamt der Haltefeder 3 aufgrund des zurückversetzten Profils 7 ohne Kraftaufwand bereits relativ weit über das Felgenhorn 6 schieben lässt, so dass zur endgültigen Fixierung des Auswuchtgewichts an der Felge ein moderater Schlag mit einem Hammer ausreicht.

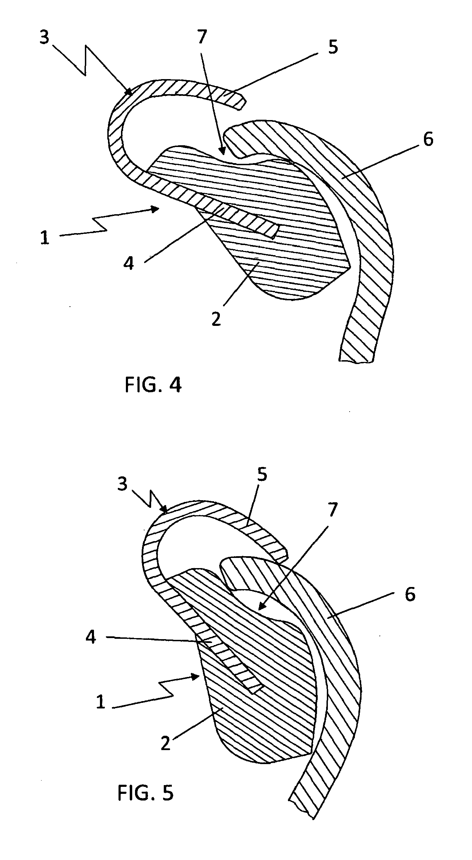

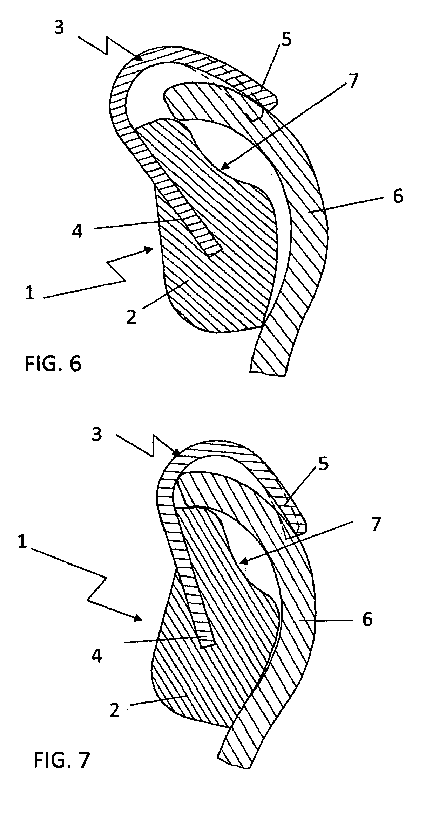

In den Figuren 4 bis 7 werden einzelne Schritte der Montage des erfindungsgemäßen Auswuchtgewichts 1 illustriert, wobei insbesondere bei den Figuren 5 und 6 die Vorteile des erfindungsgemäßen Auswuchtgewichts 1 verdeutlicht werden.

Die Figur 4 zeigt einen Schnitt durch ein Auswuchtgewicht 1 mit einem Gewichtskörper 2 mit einer eingegossenen U-förmigen, zwei Federschenkel 4, 5 umfassenden Haltefeder 3 zusammen mit dem Schnitt durch einen Ausschnitt eines Felgenhorns 6. Es ist zu erkennen, dass die Masse des Gewichtskörpers 2 um den ersten Schenkel 4 der U-förmigen Feder 3 verteilt ist, sodass ein Teilbereich des Gewichtskörpers 2 zwischen den beiden Federschenkeln 4, 5 angeordnet ist. In diesem Teilbereich weist der Gewichtskörper 2 ein zum ersten Federschenkel 4 hin zurückversetztes Profil 7 auf. Durch die Zurückversetzung des Profils 7 wird die Einführung des Felgenhorns 6 zwischen die beiden Federschenkel 4, 5 der Haltefeder 3 erleichtert.

In der Figur 5 ist der nächste Montageschritt zu sehen, bei dem das Auswuchtgewicht 1 so weit auf das Felgenhorn 6 aufgebracht ist, wie es ohne eine Spreizung der Haltefeder 3 möglich ist. Dabei kommt das Auswuchtgewicht 1 seiner Endposition am Felgenhorn 6 schon relativ nahe, ohne dass die Haltefeder 3 bislang beansprucht wurde.

Die Figur 6 zeigt den Zeitpunkt der Montage, bei dem die Haltefeder 3 ihre größte Ausdehnung erfährt. Dabei ist der Gewichtskörper 2 mit seinem zurückversetzten Profil 7 nahezu vollständig über das Felgenhorn 6 geschoben. Die gestrichelte Darstellung eines Teilbereichs des Federschenkels 5 gibt die Ausgangsposition dieses Federschenkels wieder, während der mit durchgezogenen Linien gezeichnete Federschenkel 5 die aktuelle Position im aufgezeigten Montagezustand wiedergibt. Aus dieser Darstellung ist leicht zu ersehen, dass es bei der Montage des Auswuchtgewichts 1 insgesamt nur zu einer geringfügigen Aufweitung der Haltefeder 3 kommt. Ein Überspannen der Haltefeder 3 ist somit nicht zu befürchten und das Auswuchtgewicht 1 kann ohne großen Kraftaufwand in seine Endposition am Felgenhorn 6 gebracht werden.

Die Figur 7 zeigt den Endzustand mit fertig montiertem Auswuchtgewicht 1, das auf dem Felgenhorn 6 aufgeklemmt ist. Auch hier ist wieder gestrichelt die Ausgangsposition des freien Federschenkels 5 der Haltefeder 3 eingezeichnet, um das Maß der Spannung zu verdeutlichen, unter dem die Haltefeder 3 im Montagezustand steht. Selbstverständlich ist die Spannkraft der Haltefeder 3 so gewählt, dass ein fester Halt des Auswuchtgewichts 1 am Felgenhorn 6 garantiert ist. Im vorliegenden Fall wird der feste Halt des Auswuchtgewichts an der Felge zusätzlich dadurch verstärkt, dass die Form des Auswuchtgewichts 1 weitgehend der Felgeninnenseite bzw. dem Felgenhorn 6 angepasst ist, sodass das Auswuchtgewicht 1 nach der Montage großflächig am Felgenhorn 6 anliegt. Dabei fällt es für die Stabilität der Befestigung des Auswuchtgewichts 1 an der Felge nicht ins Gewicht, dass im montierten Zustand zwischen dem das zurückversetzte Profil 7 aufweisenden Teilbereich des Auswuchtgewichts 1 und dem Felgenhorn 6 ein Hohlraum ausgebildet ist. Es wurde darüber hinaus sogar festgestellt, dass eine punktuelle Auflage am Felgenhorn 6, die sich aufgrund der speziellen Geometrie des Gewichtskörpers 2 zwangsläufig bei dem erfindungsgemäßen Auswuchtgewicht 1 ergibt, prinzipiell schon ausreicht, um einen festen Halt des Auswuchtgewichts 1 zu gewährleisten.

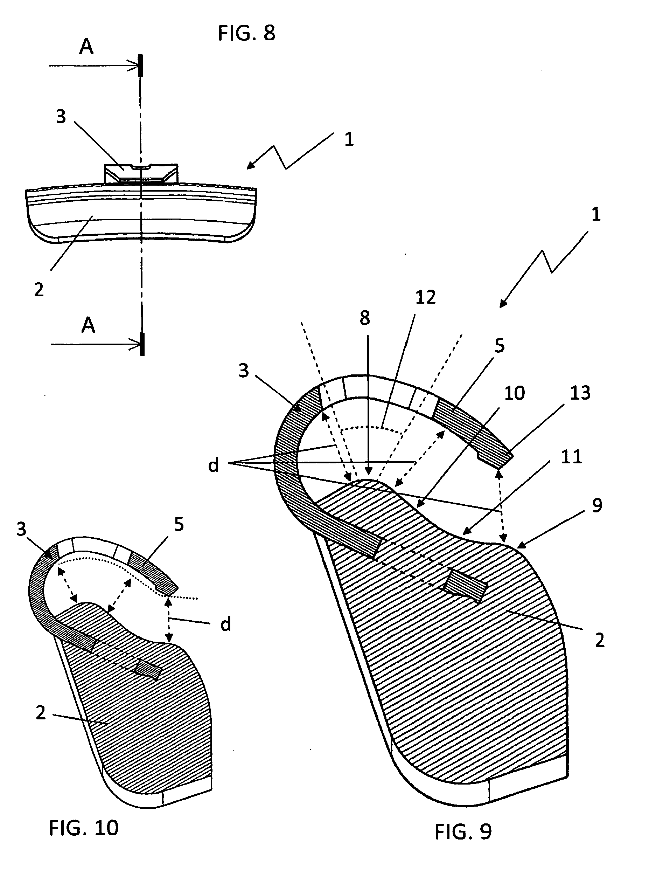

Die Figur 8 zeigt eine Draufsicht auf die Sichtseite eine Auswuchtgewichts 1 mit dem Gewichtskörper 2 und dem Ansatz der Haltefeder 3 am Gewichtskörper 2.

Die Figur 9 schließlich ist ein vergrößerter Querschnitt entlang der Achse A aus Figur 8. In dieser aus Gründen der besseren Anschaulichkeit im Vergleich zu den vorherigen Figuren etwas vergrößerten Darstellung wird der Kurvenverlauf des Profils 7 im Detail erläutert. Das Profil 7 hat einen S-förmigen Kurvenverlauf, der einem ersten Hochpunkt 8, einen Wendepunkt 10, einen Tiefpunkt 11 und einen zweiten Hochpunkt 9 umfasst. Im Bereich des ersten Hochpunktes 8 ist die Kurve dem gegenüberliegenden freien Federschenkel 5 angepasst, was mit dem eingezeichneten Kreisbogen 12 verdeutlicht wird. Der Tiefpunkt 11 ist direkt gegenüber dem Ende 13 des freien Federschenkels 5 angeordnet. Wichtig ist, dass im nicht montierten Zustand des Auswuchtgewichts 1 der Kurvenverlauf zwischen dem ersten Hochpunkt 8 und dem zweiten Hochpunkt 9 so ausgewählt ist, dass zwischen dem freien Federschenkel 5 und dem Gewichtskörper 2 ein im Wesentlichen gleichmäßiger Abstand (d) besteht. 0

Dieser im Wesentlichen gleichmäßige Abstand (d) zwischen dem freiem Federschenkel 5 und dem Gewichtskörper 2 wird zusätzlich in der größenmäßig den Figuren 4-7 angepassten Figur 10 veranschaulicht.

Aufgrund dieser besonderen geometrische Konfiguration, durch die sich das erfindungsgemäße Auswuchtgewicht 1 von den bekannten Auswuchtgewichten nach dem Stand der Technik unterscheidet, wird die Montage des Auswuchtgewichtes 1 außerordentlich erleichtert. Wie aus den Figuren 4 bis 7 ersichtlich, kann das Auswuchtgewicht 1 aufgrund der besonderen geometrischen Verhältnisse mit relativ wenig Kraftaufwand auf das Felgenhorn 6 aufgeschoben werden, wobei erst im letzten Schritt, bei dem das Felgenhorn 6 über den ersten Hochpunkt 8 geschoben werden muss, Kraft aufgewendet werden muss, die aufgrund des angepassten Kreisbogens 12 des Profils 7 im Bereich des ersten Hochpunktes 8 relativ gering ist. Der Zustand vor dem letzten Montageschritt ist in der Figur 6 wiedergegeben.

Bis zu diesem Punkt kann das Felgenhorn 6 aufgrund des gleichmäßigen Abstands (d) des Profils 7 vom freien Federschenkel 5 ohne Kraft eingeführt werden. Nach dem Überwinden des ersten Hochpunktes 8 rutscht das Felgenhorn 6 ohne weiteren Kraftaufwand in die Endposition, die in der Figur 7 wiedergegeben ist, und wird dort aufgrund der Federkraft gehalten. Belastungstests haben gezeigt, dass das erfindungsgemäße Auswuchtgewicht im montierten Zustand einen außerordentlichen festen Halt an der Felge besitzt, der noch dadurch unterstützt wird, dass die Form des Auswuchtgewichts 1 weitgehend der Felgeninnenseite angepasst ist.

### Bezugszeichenliste

- 1: Auswuchtgewicht
- 2: Gewichtskörper
- 3: Haltefeder
- 4: eingegossener Federschenkel
- 5: freier Federschenkel
- 6: Felgenhorn
- 7: Zurückversetztes Profil
- 8: erster Hochpunkt
- 9: zweiter Hochpunkt
- 10: Wendepunkt
- 11: Tiefpunkt
- 12: Kreisbogen
- 13: Ende des Federschenkels

- d: Abstand

## Patentansprüche

1. Auswuchtgewicht (1) zur Montage am Felgenhorn (6) eines Fahrzeugrades mit einem Gewichtskörper (2), einer U-förmigen, zwei Federschenkel (4, 5) umfassenden Haltefeder (3), wobei die Haltefeder (3) mit einem ersten Federschenkel (4) am Gewichtskörper (2) befestigt ist, während der zweite, freie Federschenkel (5) zur Befestigung des Auswuchtgewichts (1) am Felgenhorn (6) vorgesehen ist, wobei der bei der Montage des Auswuchtgewichts (1) dem Felgenhorn (6) zugewandte Teilbereich des Gewichtskörpers (2) ein zum ersten Federschenkel (4) hin zurückversetztes Profil (7) aufweist,
**dadurch gekennzeichnet, dass** das Profil (7) einen S-förmigen kantenfreien Kurvenverlauf mit
- einem ersten Hochpunkt (8),
- einem Wendepunkt (10),
- einem Tiefpunkt (11) und
- einem zweiten Hochpunkt (9) aufweist,
wobei die Kurve im Bereich des ersten Hochpunktes (8) einen dem gegenüberliegenden freien Federschenkel (5) angepassten Kreisbogen (12) aufweist, wobei der Tiefpunkt (11) gegenüber dem Ende (13) des freien Federschenkels (5) angeordnet ist und wobei der Kurvenverlauf im Bereich zwischen dem ersten Hochpunkt (8) und dem zweiten Hochpunkt (9) so ausgewählt ist, dass zwischen dem freien Federschenkel (5) und dem Gewichtskörper (2) ein im Wesentlichen gleichmäßiger Abstand (d) besteht.

2. Auswuchtgewicht nach Anspruch 1,
**dadurch gekennzeichnet, dass**
der Gewichtskörper (2) im Druckgussverfahren hergestellt ist.

3. Auswuchtgewicht nach Anspruch 2,
**dadurch gekennzeichnet, dass** die Haltefeder (3) im Gewichtskörper (2) eingegossen ist.

4. Auswuchtgewicht nach einem der Ansprüche 1 bis 3,
**dadurch gekennzeichnet, dass** das Material für den Gewichtskörper (2) ausgewählt ist aus der Gruppe der Metalle Zink, Blei oder Stahl sowie Legierungen davon oder Kunststoff.

5. Auswuchtgewicht nach Anspruch 4,
**dadurch gekennzeichnet, dass** der Gewichtskörper (2) des Auswuchtgewichts (1) im Wesentlichen aus Zink besteht.

6. Auswuchtgewicht nach Anspruch 5,
**dadurch gekennzeichnet, dass** das Zink mit geringen Anteilen an Aluminium und/oder Kupfer legiert ist.

7. Auswuchtgewicht nach einem der Ansprüche 1 bis 6,
**dadurch gekennzeichnet, dass** die Haltefeder (3) aus Stahl gefertigt ist.

8. Auswuchtgewicht nach Anspruch 7,
**dadurch gekennzeichnet, dass** die Haltefeder (3) verzinkt ist.

9. Auswuchtgewicht nach einem der Ansprüche 1 bis 8,
**dadurch gekennzeichnet, dass** das Auswuchtgewicht (1) eine dem Kraftfahrzeugrad, insbesondere dessen Felgeninnenseite bzw. Felgenhorn (6), weitgehend angepasste geometrische Form aufweist, wobei im montierten Zustand des Auswuchtgewichts (1) zwischen dem das zurückversetzte Profil (7) aufweisenden Teilbereich des Auswuchtgewichts (1) und dem Felgenhorn (6) ein Hohlraum ausgebildet ist.

## Claims

1. Balancing weight (1) for mounting on the flange (6) of a vehicle wheel with a weight body (2), and a U-shaped retaining spring (3) comprising two spring arms (4, 5), wherein the retaining spring (3) is fastened with a first spring arm (4) on the weight body (2), whilst the second, free spring arm (5) is provided for fastening the balancing weight (1) on the rim (6), wherein the part-region of the weight body (2) which faces the rim (6) during the mounting of the balancing weight (1) has a profile (7) which is set back towards the first spring arm (4), **characterised in that** the profile (7) has an S-shaped edge-free curve with
- a first high point (8),
- a turning point (10);
- a low point (11) and
- a second high point (9),
wherein the curve in the region of the first high point (8) has an arc of a circle (12) adapted to the opposing free spring arm (5), wherein the low point is disposed opposite the end (13) of the free spring arm (5), and wherein the curve in the region of between the first high point (8) and the second high point (9) is selected so that there is a substantially uniform spacing (d) between the free spring arm (5) and the weight body (2).

2. Balancing weight according to Claim 1, **characterised in that** the weight body (2) is produced in a die-casting process.

3. Balancing weight according to Claim 2, **characterised in that** the retaining spring (3) is cast in the weight body (2).

4. Balancing weight according to any one of Claims 1 to 3, **characterised in that** the material for the weight body (2) is selected from the group including the metals zinc, lead or steel as well as alloys thereof or plastic.

5. Balancing weight according to Claim 4, **characterised in that** the weight body (2) of the balancing weight (1) is made substantially of zinc.

6. Balancing weight according to Claim 5, **characterised in that** the zinc is alloyed with small proportions of aluminium and/or copper.

7. Balancing weight according to one of Claims 1 to 6, **characterised in that** the retaining spring (3) is made of steel.

8. Balancing weight according to Claim 7, **characterised in that** the retaining spring (3) is galvanized.

9. Balancing weight according to one of Claims 1 to 8, **characterised in that** the balancing weight (1) has a geometric shape largely adapted to the motor vehicle, in particular the inside of the rim or flange (6) thereof, wherein in the mounted state of the balancing weight (1) a hollow space is constructed between part-region of the balancing weight (1) having the set back profile (7) and the flange (6).

## Revendications

1. Poids d'équilibrage (1) destiné à être monté sur un rebord de jante (6) d'une roue de véhicule, comprenant un corps de poids (2), un ressort de retenue (3) en forme de U comprenant deux branches élastiques (4, 5), ce ressort de retenue (3) étant fixé au corps de poids (2) par une première branche élastique (4) tandis que la seconde branche élastique libre (5), a pour fonction de permettre de fixer le poids d'équilibrage (1) sur le rebord de jante (6), la zone partielle du corps de poids (2) tournée vers le rebord de jante (6) lors du montage du poids d'équilibrage (1) comportant un profil (7) décalé en arrière vers la première branche élastique (4),
**caractérisé en ce que**
le profil (7) a un tracé curviligne en forme de S exempt d'arête comprenant :
- un premier point haut (8),
- un point d'infection (10),
- un point bas (11), et
- un second point haut (9),
le tracé curviligne comprenant, dans la zone du premier point haut (8), un segment en forme d'arc de cercle (12) adapté à la branche élastique libre (5) située en regard, le point bas (11) étant situé en regard de l'extrémité (13) de la branche élastique libre (5), et le tracé curviligne étant choisi dans la zone comprise entre le premier point haut (8) et le second point haut (9) de sorte que, entre la branche élastique libre (5) et le corps de poids (2) il y ait une distance (d) essentiellement uniforme.

2. Poids d'équilibrage conforme à la revendication 1,
**caractérisé en ce que**
le corps de poids (2) est réalisé par un procédé de moulage sous pression.

3. Poids d'équilibrage conforme à la revendication 2,
**caractérisé en ce que**
le ressort de retenue (3) est coulé dans le corps de poids (2).

4. Poids d'équilibrage conforme à l'une des revendications 1 à 3,
**caractérisé en ce que**
le matériau constitutif du corps de poids (2) est choisi dans le groupe formé par le zinc, le plomb ou l'acier ainsi que leurs alliages et les matériaux synthétiques.

5. Poids d'équilibrage conforme à la revendication 4,
**caractérisé en ce que**
le corps de poids (2) du poids d'équilibrage (1) est essentiellement réalisé en zinc.

6. Poids d'équilibrage conforme à la revendication 5,
**caractérisé en ce que**
le zinc est allié avec de faibles proportions d'aluminium et/ou de cuivre.

7. Poids d'équilibrage conforme à l'une des revendications 1 à 6,
**caractérisé en ce que**
le ressort de retenue (3) est réalisé en acier.

8. Poids d'équilibrage conforme à la revendication 7,
**caractérisé en ce que**
le ressort de retenue (3) est galvanisé.

9. Poids d'équilibrage conforme à l'une des revendications 1 à 8,
**caractérisé en ce que**
le poids d'équilibrage (1) présente une forme géométrique largement adaptée à la roue du véhicule, en particulier à la face interne de la jante de celle-ci ou au rebord de jante (6), lorsque le poids d'équilibrage (1) est monté, un volume creux étant formé entre la zone partielle du poids d'équilibrage (1) comportant le profil (7) décalé en arrière et le rebord de jante (6).
